Europäisches Patentamt

European Patent Office

Office européen des brevets

(19)

(11) Veröffentlichungsnummer: **0 299 098**
**B1**

(12) ## EUROPÄISCHE PATENTSCHRIFT

(45) Veröffentlichungstag der Patentschrift:
24.01.90

(51) Int. Cl.⁴: **G02B 6/38**

(21) Anmeldenummer: **87110115.0**

(22) Anmeldetag: **14.07.87**

(54) Lichtwellenleiter-Verbinder.

(43) Veröffentlichungstag der Anmeldung:
**18.01.89 Patentblatt 89/3**

(45) Bekanntmachung des Hinweises auf die Patenterteilung:
**24.01.90 Patentblatt 90/4**

(84) Benannte Vertragsstaaten:
**CH DE FR GB IT LI SE**

(56) Entgegenhaltungen:
**EP-A- 0 045 271**
**EP-A- 0 201 944**
**DE-A- 2 733 167**
**DE-A- 2 811 404**
**DE-B- 2 819 870**

**IBM TECHNICAL DISCLOSURE BULLETIN, Band 25,
Nr. 7A, Dezember 1982, Seiten 3433-3434; L. BALLIET et
a.: "Fiber-optic splicing tool"**

(73) Patentinhaber: **INOVAN GmbH & Co. KG Metalle und
Bauelemente, Industriestrasse 44,
7534 Birkenfeld-Pforzheim(DE)**

(72) Erfinder: **Paust, Peter, Langenbrander Strasse 4,
D-7543 Engelsbrand 3(DE)**

(74) Vertreter: **Trappenberg, Hans, Postfach 1909,
D-7500 Karlsruhe 1(DE)**

ACTORUM AG

**Beschreibung**

Die Erfindung betrifft eine Vorrichtung zur Herstellung einer Steckverbindung oder eines Spleißes für Lichtwellenleiter, mit der die Lichtwellenleiter mit den senkrecht zur Leiterachse liegenden Stirnflächen aneinanderstoßend oder in einem festgelegten Abstand voneinander liegend bei übereinstimmender Richtung der Lichtwellenleiter-Achsen lösbar oder nicht lösbar festlegbar sind.

Lichtwellenleiter-Verbindungen, und zwar lösbare (Steckverbinder) wie auch nicht lösbare (Spleiße), müssen so aufgebaut sein, daß an der Verbindungsstelle eine möglichst geringe Dämpfung entsteht. Unterschieden werden hier Einfügungsverluste bei gleichen Lichtwellenleitern, wie auch Einfügungsverluste bei unterschiedlichen Lichtwellenleitern. Abgesehen von Schmutz, der zwischen die Verbindungsstellen kommen kann oder auch Reflexionsverlusten (Fresnelsche Reflexionsverluste), sind die meisten Verluste durch Fehljustierungen, also durch ungenaue Montage der Faserenden zueinander, bedingt. Hier sind insbesondere zu nennen der Abstand der Faser-Stirnflächen zueinander, der Achsenversatz der Lichtwellenleiter, wie auch der Kippwinkel zwischen den zu verbindenden Fasern. Diese Verluste, die durchaus jeweils in die Größenordnung von 0,5 bis 0,6 dB kommen können, sind durch eine sachgerechte Montage auszuschalten. Um eine solche sachgerechte Montage durchführen zu können, bedarf es jedoch entsprechender Verbindungseinrichtungen, die zudem noch, da beim Verlegen von Lichtwellenleitern sehr viele derartige Verbindungen vorzunehmen sind, wirtschaftlich herstellbar und auf einfachste Art und Weise zu montieren sein sollen. Zu bemerken ist, daß bei Spleißen die LWL direkt erfaßt und festgelegt werden, während bei Steckverbindern die Faserenden in einer Buchse geführt sind, die Verbinder also die Buchse beziehungsweise die Buchsen erfassen müssen.

Bekannte derartige Verbinder arbeiten, dieser verlangten Präzision wegen, beispielsweise mit in eine Vorrichtung eingefügten Uhrensteinen, im allgemeinen also mit in Längsrichtung der Faser durchbohrten synthetischen Rubinen, die die Faserenden tatsächlich sehr exakt führen. Bei sorgfältiger Montage werden dadurch auch die oben genannten Verluste vermieden. Allerdings sind derartige LWL-Verbinder verhältnismäßig teuer. Weiter bekannt sind auch Verbindungseinrichtungen, die die zu verbindenden Fasern in Zwickel zwischen drei im Winkel von 120° angeordneten Drähten beziehungsweise Rohren führen, wobei die Drähte beziehungsweise Rohre gemeinsam von einem Zylinder umschlossen sind. Auch bei dieser Klemmart können die oben angegebenen Justagefehler bei sorgfältiger Montage vermieden werden, wobei als Nachteil allerdings festzustellen ist, daß die Faserenden nicht einzusehen sind, damit also auch der Stirnflächenabstand nicht optisch überwacht werden kann. Die Montage dieser Verbinder ist daher verhältnismäßig schwierig und kann nur von gut ausgebildetem Personal durchgeführt werden. Außerdem ist auch dieser Verbinder verhältnismäßig teuer.

Die Erfindung gibt einen LWL-Verbinder an, der sowohl bei der Montage nur geringe Anforderungen stellt, wie auch preiswert herzustellen ist.

Erreicht wird dies durch eine Vorrichtung, die gekennzeichnet ist durch ein plattenförmiges Basisteil und eine oder mehrere am Basisteil angeordnete Blattfeder(n), deren Stirnkante(n) derart auf die Plattenfläche zu federnd abgeboden ist (sind), daß auf zwei kolinear zueinander zwischen der (den) Stirnkante(n) und dem Basisteil angeordnete Lichtwellenleiter ein Anpreßdruck ausgeübt wird.

Hierbei können entweder am Basisteil zwei mit ihren Stirnkanten benachbarte Blattfedern so angeordnet sein, daß sie zwischen sich und der Plattenfläche einen im Querschnitt etwa prismatischen Hohlraum zur Aufnahme der zu verbindenden LWL einschließen oder das Basisteil kann einseitig abgekantet und die Blattfeder so angeordnet sein, daß ihre Stirnkante in den Grund der Abbiegung, dort den LWL erfassend, zeigt. Zur Montage müssen nunmehr lediglich noch die Lichtwellenleiter auf das Basisteil aufgelegt und sodann die Blattfedern auf die Lichtwellenleiter aufgesetzt werden, wobei die Lichtwellenleiter beide Male sicher und jeweils in Achsrichtung zueinander liegend, fixiert sind. Selbstverständlich können auf jedem Basisteil auch zwei Blattfedern – je eine für jeden Lichtwellenleiter – angeordnet sein oder auch eine Blattfeder, die mittig mit einem Längsschlitz versehen ist, wodurch Durchmesserunterschiede der zu verbindenden LWL berücksichtigt werden. Wie angestrebt ist bei diesem Verbinder die Stoßstelle der Lichtwellenleiter-Stirnflächen einsehbar und damit auch der korrekte Abstand dieser Lichtwellenleiter, falls sie nicht aufeinanderstoßen sollen, justierbar. Auch ist es unschwer möglich, die Verbindungsstelle der Lichtwellenleiter bei Spleißen mit einem entsprechenden Kunstharz zu fixieren und damit die Lage der Lichtwellenleiter dauerhaft festzulegen.

Hervorzuheben ist, daß die Vorrichtung nach der Erfindung äußerst wirtschaftlich herstellbar ist und, da schwierige Justieroperationen nicht auftreten, auch einfach und daher schnell und preiswert montiert werden kann.

Die Blattfeder beziehungsweise die Blattfedern können fest mit dem Basisteil verbunden oder in Abkantungen des plattenförmigen Basisteils eingefügt sein. Weiter besteht auch die Möglichkeit, daß die Blattfeder, das Basisteil zumindest teilweise ungreifend, auf dieses Basisteil aufgeschnappt wird. Sehr wirtschaftlich ist ein derartiger Verbinder herstellbar, wenn die Blattfeder(n) einstückig mit dem Basisteil ist (sind), wobei selbstverständlich das Blechband zum Formen einer derartigen Spleißklemme aus federndem Material bestehen soll. Allerdings kommt zum Formen eines derartigen Verbinders nicht nur Federblech oder ähnliches Material in Frage, sondern, einem weiteren Erfindungsmerkmal nach, auch geringfügig federnd nachgiebiger Kunststoff.

Auf der Zeichnung sind Ausführungsbeispiele des Erfindungsgegenstandes schematisch dargestellt, und zwar zeigen:

Fig. 1 eine erste Ausführung mit zwei Federklemmen in perspektivischer Darstellung,

Fig. 2 eine Ansicht mit einer eingefügten Federklemme,

Fig. 3 eine Ansicht mit einstückig mit dem Basisteil verbundener Federklemme,

Fig. 4 eine Variante der Fig. 1,

Fig. 5 eine Variante der Fig. 2,

Fig. 6 eine der Fig. 1 entsprechende einstückige Ausführung und

Fig. 7 eine Ausführung mit das Basisteil umfassender Blattfeder.

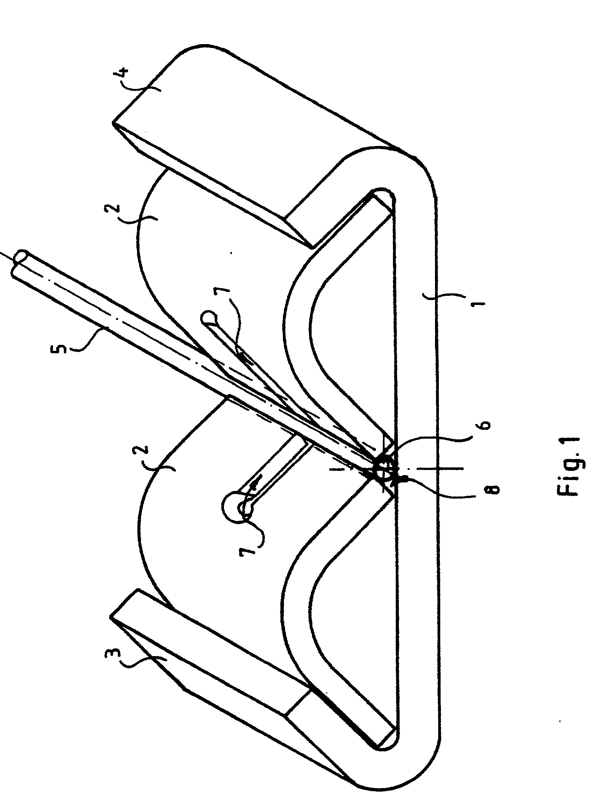

Ein Blechband aus federnd elastischem Material ist gemäß Fig. 1 zu einem Basisteil des erfindungsgemäßen Verbinders geformt. Hierbei sind die beiden Enden so nach innen umgebogen, daß sie mit der Bodenplatte dieses Basisteils etwa einen Winkel von 45° einschließen. In dieses Basisteil eingelegt sind etwa C-förmig gebogene Blattfedern 2, so, daß sie sich einerseits an die abgebogenen Endstücke 3, 4 des Basisteils 1 anlehnen, und andererseits ihre Stirnkanten benachbart sind. Zwischen diese Stirnkanten sind die beiden Enden von Lichtwellenleitern 5, 6 eingefügt, so daß die Stirnflächen dieser Blattfedern 2 federnd auf den Lichtwellenleitern aufliegen und sie damit sicher fixieren. Mittig, in Längsrichtung der Blattfedern 2 beziehungsweise quer zur Achse der Lichtwellenleiter 5, 6, sind die Blattfedern 2 geschlitzt 7, wodurch nicht nur die Verdindungsstelle zwischen den Lichtwellenleitern 5, 6 eingesehen und gegebenenfalls vergossen werden kann, sondern wodurch auch geringfügige Durchmesserunterschiede zwischen den Lichtwellenleitern 5, 6 ausgeglichen werden.

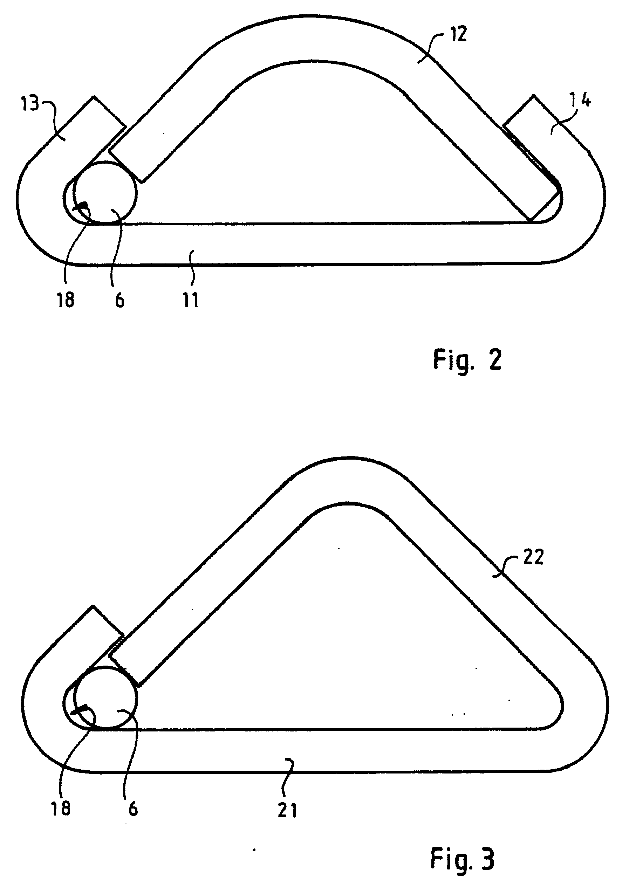

Einen ähnichen Verbinder zeigt Fig. 2, wo jedoch nur eine Blattfeder 12 zwischen die abgebogenen Enden 13, 14 eines Basisteils 11 eingefügt ist und auf die Lichtwellenleiter, die in die Abbiegung 13 eingelegt sind, drückt. Auch die Blattfeder 12 kann selbstverständlich wiederum an der Verbindungsstelle der Lichtwellenleiter, wie dies Fig. 1 zeigt, geschlitzt sein.

Im Aufbau ähnlich ist der erfindungsgemäße Verbinder nach Fig. 3, wobei jedoch die Blattfeder 22 einstückig mit dem Basisteil 21 verbunden ist. Diese Ausführung des Verbinders hat den Vorteil besonders wirtschaftlicher Herstellung.

Zur Montage eines Spleißes unter Verwendung dieser erfindungsgemäßen Vorrichtung kann das Basisteil 1 der Ausführung nach Fig. 1, sofern es aus federndem Material besteht, durch eine Spezialzange, die von der Unterseite angesetzt wird, so verspannt werden, daß sich das Basisteil 1 geringfügig nach innen wölbt, wodurch die beiden Blattfedern 2 mit ihren benachbarten Stirnflächen auseinanderrücken, so daß die Lichtwellenleiter unschwer eingeschoben werden können. Nach Loslassen des Basisteils rücken die beiden Blattfedern 2 wieder zusammen und erfassen sicher ohne Achsenversatz und Kippwinkel die eingelegten Lichtwellenleiter 5, 6. Da die Verbindungsstelle einzusehen ist, kann auch ein Stirnflächenabstand vermieden beziehungsweise eingestellt werden. Nach der Montage ist es möglich, die Verbindung mit einer entsprechenden Kunstharzmasse zu vergießen und damit zu stabilisieren.

Der gleiche Spleiß wie bei dem Verbinder nach Fig. 1 kann bei einem starren Basisteil 1 auch so montiert werden, daß wiederum mittels einer Spezialzange, die zwischen dem Ende des Basisteils und dem Schlitz angreift, eine der Blattfedern oder auch beide Blattfedern soweit zurückgezogen werden, daß wiederum die Lichtwellenleiter in der beschriebenen Art einzufügen und zu fixieren sind.

Bei den Vorrichtungen nach den Fig. 2 und 3 können zum Herstellen eines Spleißes die dort vorgesehenen Blattfedern 12, 22 erfaßt und angehoben werden, so daß auch hier wiederum die Lichtwellenleiter 5, 6 unschwer einzuschieben und nach Loslassen der Blattfedern 12, 22 zu fixieren sind. Auch hier besteht die Möglichkeit des anschließenden Vergießens der Verbinder, so daß sich eine äußerst dauerhafte Verbindung ergibt.

Bei Steckverbindern empfiehlt es sich, einen Einführungstrichter an der Klemmstelle vorzusehen, um das mit einer Buchse versehene Faserende in die Klemmstelle einschieben zu können.

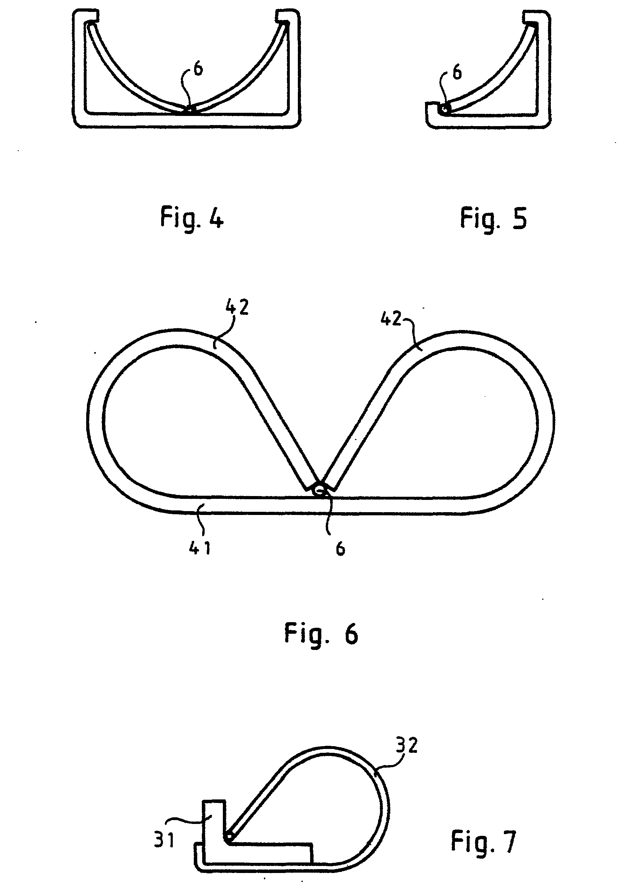

Die Fig. 4 und 5 zeigen Varianten der Ausführungen nach den Fig. 1 und 2, die bei einigermaßen Fertigkeit auch eine Montage ohne Werkzeug zulassen. Fig. 6 entspricht einer Kombination der Ausführungen nach den Fig. 1 und 3, da hier der einstückig aus federndem Material gefertigte Verbinder mit den beiden Blattfeder-Stirnflächen wiederum auf die Lichtwellenleiter drückt und sie sicher fixiert. Die so bewirkte "schwimmende" Fixierung vermeidet einen einseitigen Druck auf die Lichtwellenleiter, der ebenfalls zu einer unerwünschten Dämpfung oder gar zum Bruch des LWL führen kann. Fig. 7 zeigt schließlich noch eine prinzipielle der Ausführung nach Fig. 2 entsprechende Variante, bei der die Blattfeder 32 auf das Basisteil 31 aufgeschnappt ist.

**Patentansprüche**

1. Vorrichtung zur Herstellung einer Steckverbindung oder eines Spleißes für Lichtwellenleiter, mit der die Lichtwellenleiter mit den senkrecht zur Leiterachse liegenden Stirnflächen aneinanderstoßend oder in einem festgelegten Abstand voneinander liegend bei übereinstimmender Richtung der Lichtwellenleiter-Achsen lösbar oder nicht lösbar festlegbar sind, gekennzeichnet durch ein plattenförmiges Basisteil (1, 11, 21, 31) und eine oder mehrere am Basisteil (1, 11, 21, 31) angeordnete Blattfeder(n) (2, 12, 22, 32), deren Stirnkante(n) derart auf die Plattenfläche zu federnd abgebogen ist (sind), daß auf zwei kolinear zueinander zwischen der (den) Stirnkante(n) und dem Basisteil (1, 11, 21, 31) angeordneten Lichtwellenleiter (6) ein Anpreßdruck ausgeübt wird.

2. Vorrichtung nach Anspruch 1, dadurch gekennzeichnet, daß am Basisteil (1) zwei mit den Stirnkanten benachbarte Blattfedern (2) so angeordnet sind, daß sie zwischen sich und der Plattenfläche einen im Querschnitt etwa prismatischen Hohlraum (8) einschließen.

3. Vorrichtung nach Anspruch 1, dadurch gekennzeichnet, daß das Basisteil (11 einseitig abgebogen ist und die Blattfeder (12) so angeordnet ist, daß ihre Stirnkante in den Grund (18) der Abbiegung zeigt.

4. Vorrichtung nach Anspruch 2, dadurch gekennzeichnet, daß die nicht benachbarten Enden der Blattfedern (2) in seitliche Abkantungen (3, 4) des plattenförmigen Basisteils (1) eingefügt sind.

5. Vorrichtung nach Anspruch 3, dadurch gekennzeichnet, daß das nicht in den Grund (18) der Abbiegung (13) weisende Ende der Blattfeder (12) in eine seitliche Abkantung (14) des plattenförmigen Basisteils (11) eingefügt ist.

6. Vorrichtung nach Anspruch 2 oder 3, dadurch gekennzeichnet, daß die Blattfeder (32) das Basisteil (31) zumindest teilweise umfaßt.

7. Vorrichtung nach einem oder mehreren der vorhergehenden Ansprüche, dadurch gekennzeichnet, daß das Basisteil (41) und die Blattfeder(n) (42) aus einem entsprechend gebogenen federnden Band sind.

8. Vorrichtung nach einem oder mehreren der vorhergehenden Ansprüche, dadurch gekennzeichnet, daß die Blattfedern (2, 12, 22, 32, 42) im auf die Plattenfläche zu federnd abgebogenen Teil mit einem mittigen Längsschlitz (7) versehen sind.

9. Vorrichtung nach einem oder mehreren der vorhergehenden Ansprüche, dadurch gekennzeichnet, daß jeweils zwei parallel verlaufende Blattfedern am Basisteil angeordnet sind.

10. Vorrichtung nach einem oder mehreren der vorhergehenden Ansprüche, dadurch gekennzeichnet, daß das Basisteil und/oder die Blattfeder(n) aus geringfügig nachgiebigem Kunststoff sind.

**Claims**

1. Device for producing a plug connection or a splice for optical fibers, with which the optical fibers can be fixed detachably or non-detachably with the end faces lying vertical with respect to the fiber axis abutting or lying at a fixed distance from one another with corresponding direction of the optical fiber axes, characterized by a platelike base part (1, 11, 21, 31), and arranged on the base part (1, 11, 21, 31) one or more leaf spring(s) (2, 12, 22, 32), the end face(s) of which is(are) bent resiliently towards the plate surface in such a way that a bearing pressure is exerted on two optical fibers (6) arranged colinear to one another between the end face(s) and the base part (1, 11, 21, 31).

2. Device according to Claim 1, characterized in that two leaf springs (2) are arranged on the base part (1) with the end faces adjacent in such a way that they enclose between themselves and the plate surface an approximately prismatic cross-sectioned cavity (8).

3. Device according to Claim 1, characterized in that the base part (11) is bent on one side and the leaf spring (12) is arranged in such a way that its end face points towards the root (18) of the bent part.

4. Device according to Claim 2, characterized in that the non-adjacent ends of the leaf springs (2) are placed in lateral angled parts (3, 4) of the platelike base part (1).

5. Device according to Claim 3, characterized in that the end of the leaf spring (12) not directed towards the root (18) of the bent part (13) is placed in a lateral angled part (14) of the platelique base part (11).

6. Device according to Claim 2 or 3, characterized in that the leaf spring (32) at least partially encloses the base part (31).

7. Device according to one or more of the preceding claims, characterized in that the base part (41) and the leaf spring(s) (42) are made of a correspondingly bent resilient band.

8. Device according to one or more of the preceding claims, characterized in that the leaf springs (2, 12, 22, 32, 42) are provided in the part bent resiliently towards the plate surface with a central longitudinal slit (7).

9.. Device according to one or more of the preceding claims, characterized in that in each case two leaf springs extending in parallel are arranged on the base part.

10. Device according to one or more of the preceding claims, characterized in that the base part and/or the leaf spring(s) are made of slightly resilient plastic.

**Revendications**

1. Dispositif pour établir une jonction emboîtée ou une épissure de guides d'ondes lumineuses, à l'aide duquel les guides d'ondes lumineuses peuvent être consignés à demeure de manière libérable ou non libérable, en étant en butée mutuelle par les faces extrêmes perpendiculaires à l'axe du guide, ou bien en reposant à une distance réciproque fermement établie, avec direction coïncidente des axes des guides d'ondes lumineuses, caractérisé par une partie de base (1, 11, 21, 31) en forme de plaque et par une ou plusieurs lame(s) de ressort (2, 12, 22, 32) disposée(s) sur cette partie de base (1, 11, 21, 31), et dont l'arête ou les arêtes frontale(s) est (sont) cintrée(s) élastiquement en direction de la surface de la plaque, de telle sorte qu'une pression de contact soit exercée sur deux guides (6) d'ondes lumineuses, colinéaires et interposés entre l'arête ou les arêtes frontale(s) et la partie de base (1, 11, 21, 31).

2. Dispositif selon la revendication 1, caractérisé par le fait que deux lames de ressort (2) voisines par leurs arêtes frontales sont disposées, sur la partie de base (1), de façon à délimiter une cavité (8) de section sensiblement prismatique entre elles-mêmes et la surface de la plaque.

3. Dispositif selon la revendication 1, caractérisé par le fait que la partie de base (11) est cintrée d'un côté, et la lame de ressort (12) est disposée de façon que son arête frontale soit orientée vers le fond (18) du cintrage.

4. Dispositif selon la revendication 2, caractérisé par le fait que les extrémités non attenantes des lames de ressort (2) sont nichées dans des coudes latéraux (3, 4) de la partie de base (1) en forme de plaque.

5. Dispositif selon la revendication 3, caractérisé par le fait que l'extrémité de la lame de ressort (12), non orientée vers le fond (18) du cintrage (13), est nichée dans un coude latéral (14) de la partie de base (11) en forme de plaque.

6. Dispositif selon la revendication 2 ou 3, caractérisé par le fait que la lame de ressort (32) entoure au moins partiellement la partie de base (31).

7. Dispositif selon l'une ou plusieurs des revendications précédentes, caractérisé par le fait que la partie de base (41) et la ou les lame(s) de ressort (42) consistent en un ruban élastique, ployé de manière correspondante.

8. Dispositif selon l'une ou plusieurs des revendications précédentes, caractérisé par le fait que les lames de ressort (2, 12, 22, 32, 42) sont pourvues d'une fente longitudinale centrale (7) dans la partie cintrée élastiquement en direction de la surface de la plaque.

9. Dispositif selon l'une ou plusieurs des revendications précédentes, caractérisé par le fait que deux lames de ressort, s'étendant parallèlement, sont respectivement disposées sur la partie de base.

10. Dispositif selon l'une ou plusieurs des revendications précédentes, caractérisé par le fait que la partie de base et/ou la ou les lame(s) de ressort consistent en une matière plastique douée d'une faible souplesse.

Fig. 1

Fig. 2

Fig. 3

Fig. 4          Fig. 5

Fig. 6

Fig. 7